# EUROPEAN PATENT APPLICATION

(11) **EP 4 475 458 A1**
(43) Date of publication of application: **11.12.2024**
(21) Application number: 22924785.3
(22) Date of filing: 03.02.2022
(51) Int. Cl.: H04B 10/278

(54) **OPTICAL COMMUNICATION SYSTEM, AGGREGATION STATION, AND COMMUNICATION METHOD**

(71) Applicant: Nippon Telegraph And Telephone Corporation, Chiyoda-ku Tokyo 100-8116 (JP); NTT DOCOMO, INC., Tokyo 100-6150 (JP)
(72) Inventor: ITO Kota, Musashino-shi, Tokyo 180-8585 (JP); TAKAHASHI Yuta, Musashino-shi, Tokyo 180-8585 (JP); SUGA Mizuki, Musashino-shi, Tokyo 180-8585 (JP); ARAI Takuto, Musashino-shi, Tokyo 180-8585 (JP); SHIRATO Yushi, Musashino-shi, Tokyo 180-8585 (JP); UCHIDA Daisei, Musashino-shi, Tokyo 180-8585 (JP); TOSHINAGA Hideki, Musashino-shi, Tokyo 180-8585 (JP); KITA Naoki, Musashino-shi, Tokyo 180-8585 (JP); KISHIYAMA Yoshihisa, Tokyo 100-6150 (JP); SUYAMA Satoshi, Tokyo 100-6150 (JP)
(74) Representative: Brevalex
(86) International application number: PCT/JP2022/004228
(87) International publication number: WO 2023/148874

(57) **Abstract**

Provided is an optical communication system having an aggregate station at a head and a plurality of extension stations connected in series. The aggregate station outputs a downlink optical signal generated by performing electrical-to-optical (E/O) conversion for a radio signal to the plurality of extension stations and acquires radio signals by performing optical-to-electrical (O/E) conversion for uplink optical signals input from the plurality of extension stations. Each extension station transmits a radio signal obtained by performing O/E conversion for the downlink optical signal received from the aggregate station and transmits an uplink optical signal generated by performing E/O conversion for a received radio signal to the aggregate station. Wavelengths of the uplink optical signal and the downlink optical signal allocated to the plurality of extension stations are the same.

## Description

### [Technical Field]

The present invention relates to an optical communication system, an aggregate station, and a communication method.

### [Background Art]

Radio waves in a millimeter-wave band are attracting attention because the radio waves can be transmitted at high speeds. However, because radio waves in the millimeter-wave band have large propagation loss, it is necessary to install wireless base stations at high density.

As a method of installing a wireless base station, a method of applying analog radio-over-fiber (RoF) is disclosed in Non-Patent Document 1. Analog RoF is technology in which an optical signal is intensity-modulated with a radio signal and the intensity-modulated optical signal is transmitted through an optical fiber, and can extract an original radio signal by performing optical-to-electrical (O/E) conversion for the transmitted optical signal.

By applying analog RoF, wireless base stations can be separated into an aggregate station that performs signal processing and an extension station having an antenna function, and a signal processing function can be integrated into the aggregate station. Thereby, it is possible to simplify and more easily install the extension station.

Non-Patent Document 2 discloses that the aggregate station and the extension stations are connected according to a cascade configuration so that the extension stations are installed more easily.

### [Citation List]

### [Non-Patent Document]

### [Non-Patent Document 1]

Kota Ito, Mizuki Suga, Yushi Shirato, Naoki Kita, and Takeshi Onizawa, Efficiently Accommodating High-frequency-band Wireless Systems by Using Analog Radio-over-fiber, NTT Technology Journal, 32(3), 15-17, 2020.

### [Non-Patent Document 2]

E.-S. Kim, M. Sung, J. H. Lee, J. K. Lee, S.-H. Cho, and J. Kim, "Coverage Extension of Indoor 5G Network Using RoF-Based Distributed Antenna System," IEEE Access, vol. 8, pp. 194992-194999, 2020.

### [Summary of Invention]

### [Technical Problem]

According to Non-Patent Document 2, two wavelengths are allocated to each extension station for an optical signal in an uplink direction and an optical signal in a downlink direction. When the two wavelengths are allocated to each extension station, the design is different for each extension station and the design may cost a lot of money.

The present invention provides an optical communication system capable of being designed at a lower cost, an aggregate station of the optical communication system, and a communication method.

### [Solution to Problem]

According to an aspect of the present invention, there is provided an optical communication system having an aggregate station at a head and a plurality of extension stations connected in series, wherein the aggregate station outputs a downlink optical signal generated by performing electrical-to-optical (E/O) conversion for a radio signal to the plurality of extension stations and acquires radio signals by performing optical-to-electrical (O/E) conversion for uplink optical signals input from the plurality of extension stations, wherein each extension station transmits a radio signal obtained by performing O/E conversion for the downlink optical signal received from the aggregate station and transmits an uplink optical signal generated by performing E/O conversion for a received radio signal to the aggregate station, and wherein wavelengths of the uplink optical signal and the downlink optical signal allocated to the plurality of extension stations are the same.

According to an aspect of the present invention, there is provided an aggregate station in an optical communication system having the aggregate station at a head and a plurality of extension stations connected in series, wherein only an optical signal of a first wavelength is transmitted to the extension station and only an optical signal of a second wavelength different from the first wavelength is received from the extension station.

According to an aspect of the present invention, there is provided a communication method in an optical communication system having an aggregate station at a head and a plurality of extension stations connected in series, the communication method including: a downlink optical signal generation step of generating a downlink optical signal by performing E/O conversion for a radio signal in the aggregate station; an output step of outputting the downlink optical signal to the plurality of extension stations; a radio signal acquisition step of acquiring radio signals by performing O/E conversion for uplink optical signals input from the plurality of extension stations; a radio signal transmission step of transmitting a radio signal obtained by performing O/E conversion for the downlink optical signal received from the aggregate station in the extension station; and an optical signal transmission step of transmitting an uplink optical signal generated by performing E/O conversion for a received radio signal to the aggregate station, wherein wavelengths of the uplink optical signal and the downlink optical signal allocated to the plurality of extension stations are the same.

### [Advantageous Effects of Invention]

An optical communication system of the present invention can be designed at a lower cost.

### [Brief Description of Drawings]

FIG. 1 is a diagram showing a configuration of an optical communication system in which an aggregate station and an extension station are connected through a cascade configuration.
FIG. 2 is a diagram showing a configuration of the aggregate station.
FIG. 3 is a diagram showing a configuration of an i^{th} extension station (i is an integer satisfying 1 ≤ i ≤ N).
FIG. 4 is a flowchart showing a transmission method of the aggregate station.
FIG. 5 is a flowchart showing a reception method of the aggregate station.
FIG. 6 is a flowchart showing a communication method in which the extension station communicates with upstream equipment.
FIG. 7 is a flowchart showing a communication method in which the extension station communicates with downstream equipment.

### [Description of Embodiments]

### <Optical communication system>

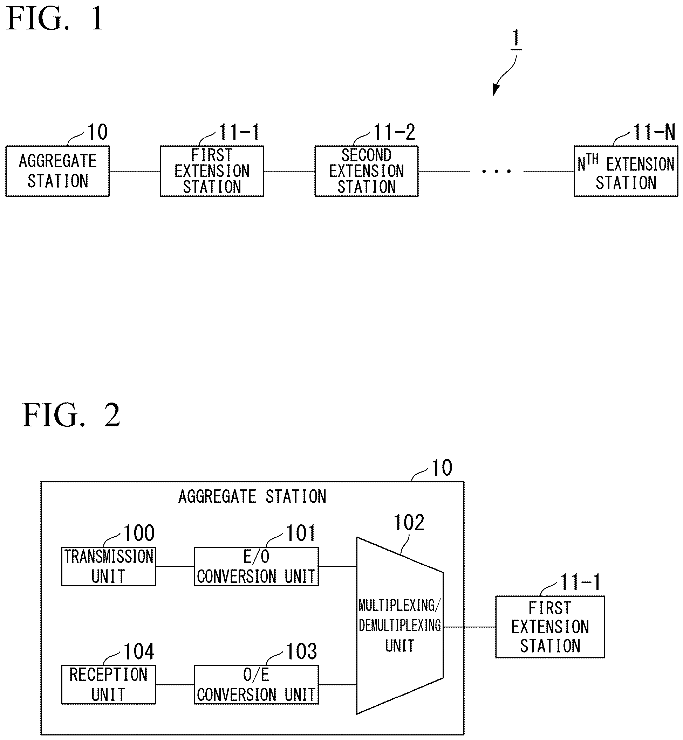

FIG. 1 is a diagram showing a configuration of an optical communication system 1 in which an aggregate station 10 and extension stations 11 are connected through a cascade configuration. The optical communication system 1 has one aggregate station 10 and N extension stations 11 (N is an integer of 2 or more). The optical communication system 1 has the aggregate station 10 at a head and the N extension stations 11 connected in series. Hereinafter, each extension station 11 is referred to as an i^{th} extension station 11-i (i is an integer satisfying 1 ≤ i ≤ N) when the N extension stations 11 are distinguished, but is simply referred to as an extension station 11 when features common to all i^{th} extension stations 11-i are described. In addition, the ordinal number i is equal to the number of hops from the aggregate station 10. In the optical communication system 1, a direction from the aggregate station 10 to the extension station 11 is referred to as a downstream direction and a direction from the extension station 11 to the aggregate station 10 is referred to as an upstream direction.

The aggregate station 10 transmits a downlink optical signal generated by performing electrical-to-optical (E/O) conversion for a generated radio signal to the first extension station 11-1. The first extension station 11-1 branches the received downlink optical signal, transmits a partial optical signal to the second extension station 11-2, locally processes the remaining optical signal, and transmits a radio signal in accordance with the optical signal. The first extension station 11-1, for example, radiates a radio signal obtained by performing optical-to-electrical (O/E) conversion for an optical signal to a space via an antenna. Second to (N-1)^{th} extension stations 11-2 to 11-(N-1) also perform operations similar to that of the first extension station 11-1. That is, the i^{th} extension station 11-i (i is an integer satisfying 2 ≤ i ≤ N-1) branches the optical signal received from an (i-1)th extension station 11-(i-1), which upstream equipment, and transmits a partial optical signal to an (i+1)^{th} extension station 11-(i+1), which is downstream equipment.

The i^{th} extension station 11-i (i is an integer satisfying 2 ≤ i ≤ N-1), for example, generates an uplink optical signal by performing E/O conversion for a radio signal received via an antenna. The i^{th} extension station 11-i merges an optical signal received from the downstream equipment and an uplink optical signal and transmits a merging result to the upstream equipment. That is, the i^{th} extension station 11-i merges the optical signal received from the (i+1)^{th} extension station 1 1-(i+1) and an optical signal obtained by multiplexing locally received radio signals and transmits an optical signal obtained in the merging process to the (i-1)^{th} extension station 1 1-(i-1).

That is, the optical signal transmitted from the aggregate station 10 descends to the first extension station 11-1 and the second extension station 11-2 and finally reaches the N^{th} extension station 11-N. Moreover, the optical signal transmitted from the N^{th} extension station 11-N ascends to the (N-1)^{th} extension station 11-(N-1) and finally reaches the aggregate station 10. The aggregate station 10 performs O/E conversion for the optical signal arriving thereat and acquires a radio signal. The radio signal, for example, is subjected to signal processing.

As described above, in the optical communication system 1, the aggregate station 10 is located at the head and the N extension stations 11 are connected in series. A radio signal received in the extension station 11 is converted into an optical signal without signal processing in the extension station 11 and aggregated in the aggregate station 10. The optical signal aggregated in the aggregate station 10 is converted into a radio signal and the radio signal received by the extension station 11 is extracted. Because the extension station 11 does not need to include a configuration in which signal processing of a radio signal is performed, the extension station 11 can be easily implemented.

FIG. 2 is a diagram showing a configuration of the aggregate station 10. The aggregate station 10 includes a transmission unit 100, an E/O conversion unit 101, a multiplexing/demultiplexing unit 102, an O/E conversion unit 103, and a reception unit 104.

The transmission unit 100 transmits an electrical signal to the E/O conversion unit 101. The E/O conversion unit 101 converts the received electrical signal into an optical signal and transmits the optical signal to the multiplexing/demultiplexing unit 102. A wavelength of the optical signal transmitted to the multiplexing/demultiplexing unit 102 by the E/O conversion unit 101 is denoted by λ_{DL}. The multiplexing/demultiplexing unit 102 multiplexes optical signals received from the E/O conversion units 101 and transmits a multiplexing result to the first extension station 11-1. Moreover, the multiplexing/demultiplexing unit 102 demultiplexes an optical signal received from the first extension station 11-1 and transmits the demultiplexed optical signal to the O/E conversion units 103.

The O/E conversion unit 103 converts a received optical signal into an electrical signal and transmits the electrical signal to the reception unit 104. A wavelength of the optical signal received by the O/E conversion unit 103 is denoted by λ_{UL}. The reception unit 104 receives an electrical signal from the O/E conversion unit 103. The electrical signal received by the reception unit 104, for example, is subjected to signal processing.

### <Extension station>

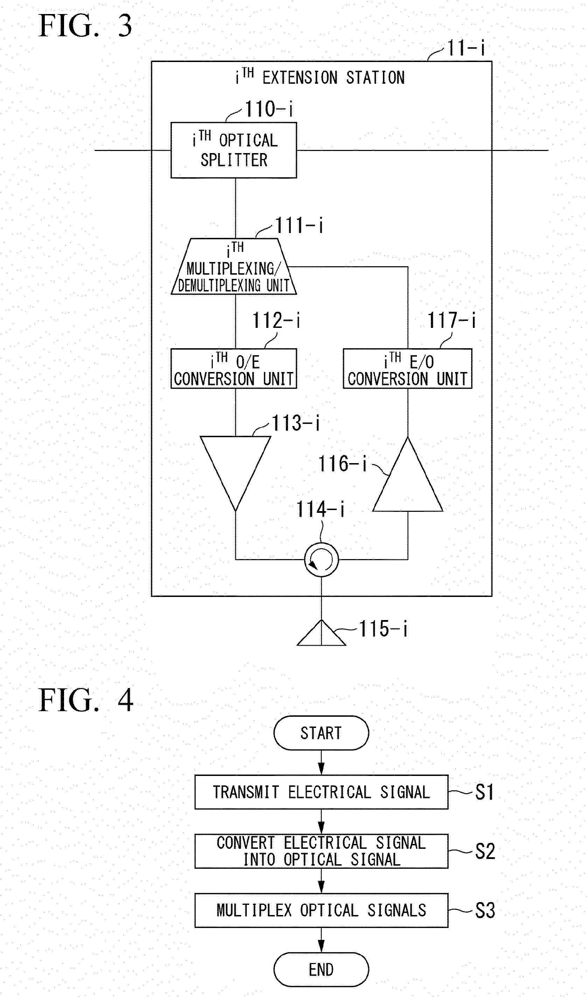

FIG. 3 is a diagram showing a configuration of the i^{th} extension station 11-i (i is an integer satisfying 1 ≤ i ≤ N). The i^{th} extension station 11-i includes an i^{th} optical splitter 110-i, an i^{th} multiplexing/demultiplexing unit 111-i, an i^{th} O/E conversion unit 112-i, an i^{th} transmission amplifier 113-i, an i^{th} circulator 114-i, an i^{th} antenna 115-i, an i^{th} reception amplifier 116-i, and an i^{th} E/O conversion unit 117-i. Like the i^{th} extension station 11-i, the i^{th} optical splitter 110-i, the i^{th} multiplexing/demultiplexing unit 111-i, the i^{th} O/E conversion unit 112-i, the i^{th} transmission amplifier 113-i, the i^{th} circulator 114-i, the i^{th} antenna 115-i, the i^{th} reception amplifier 116-i, and the i^{th} E/O conversion unit 117-i are referred to as the optical splitter 110, the multiplexing/demultiplexing unit 111, the O/E conversion unit 112, the transmission amplifier 113, the circulator 114, the antenna 115, the reception amplifier 116, and the E/O conversion unit 117, respectively, when a feature not depending upon the position of the extension station 11 is described.

The i^{th} optical splitter 110-i branches the optical signal received from the upstream equipment and transmits the branched optical signal to the i^{th} multiplexing/demultiplexing unit 111-i and the (i+1)^{th} extension station 11-(i+1). The first optical splitter 110-1 branches the optical signal received from the aggregate station 10 and the i^{th} optical splitter 110-i (i is an integer satisfying 2 ≤ i ≤ N-1) branches the optical signal received from the (i-1)^{th} extension station 11-(i-1).

The i^{th} optical splitter 110-i merges the optical signals transmitted from the i^{th} multiplexing/demultiplexing unit 111-i and the (i+1)^{th} extension station 11-(i+1), which is the downstream equipment, and transmits an optical signal obtained in the merging process to the upstream equipment. The first optical splitter 110-1 transmits an optical signal obtained in the merging process to the aggregate station 10 and the i^{th} optical splitter 110-i (i is an integer satisfying 2 ≤ i ≤ N-1) transmits the optical signal obtained in the merging process to the (i-1)^{th} extension station 11-(i-1).

The i^{th} multiplexing/demultiplexing unit 111-i includes, for example, an optical multiplexing/demultiplexing unit. The i^{th} multiplexing/demultiplexing unit 111-i demultiplexes the optical signal received from the i^{th} optical splitter 110-i, extracts a signal having a wavelength λ_{DLi}, and outputs the signal to the i^{th} O/E conversion unit 112-i. The i^{th} multiplexing/demultiplexing unit 111-i transmits an optical signal having a wavelength λ_{ULi} among the optical signals received from the i^{th} E/O conversion unit 117-i to the i^{th} optical splitter 110-i. The optical signal transmitted from the i^{th} E/O conversion unit 117-i is finally received by the reception unit 104.

The i^{th} O/E conversion unit 112-i converts the optical signal received from the i^{th} multiplexing/demultiplexing unit 111-i into an electrical signal and transmits the electrical signal to the i^{th} transmission amplifier 113-i. The i^{th} transmission amplifier 113-i amplifies the electrical signal received from the i^{th} O/E conversion unit 112-i and transmits the amplified electrical signal to the i^{th} circulator 114-i.

The i^{th} circulator 114-i transmits an electrical signal received from the i^{th} transmission amplifier 113-i to the i^{th} antenna 115-i. Moreover, the i^{th} circulator 114-i transmits the electrical signal received from the i^{th} antenna 115-i to the i^{th} reception amplifier 116-i.

The i^{th} antenna 115-i radiates an electrical signal received from the i^{th} circulator 114-i to a space. Moreover, the i^{th} antenna 115-i transmits the received electrical signal to the i^{th} circulator 114-i.

The i^{th} reception amplifier 116-i amplifies the electrical signal received from the i^{th} circulator 114-i and transmits the amplified electrical signal to the i^{th} E/O conversion unit 117-i. The i^{th} E/O conversion unit 117-i converts an electrical signal received from the i^{th} reception amplifier 116-i into an optical signal having a wavelength λ_{ULi} and transmits the optical signal to the i^{th} multiplexing/demultiplexing unit 111-i.

The N^{th} extension station 11-N has substantially the same configuration as the i^{th} extension station 11-i (i is an integer satisfying 1 ≤ i ≤ N-1), but may not include an optical splitter.

In the i^{th} optical splitter 110-i, because an optical signal having a wavelength λ_{UL} transmitted from the i^{th} multiplexing/demultiplexing unit 111-i and an optical signal having a wavelength λ_{UL} transmitted from the (i+1)^{th} extension station 11-(i+1) are merged, the optical signals may interfere with each other. In order to reduce an influence of the optical signal due to interference, the i^{th} optical splitter 1 10-i may switch between whether or not to merge the optical signals. The optical signal transmitted from the (i+1)^{th} extension station 11-(i+1) may be output to upstream equipment without merging with the optical signal transmitted from the i^{th} multiplexing/demultiplexing unit 111-i.

Moreover, when the aggregate station 10 has a delay wave removal function of removing a wave (delay wave) whose delay time included in the input optical signal is greater than or equal to a predetermined time, an influence of an interference component of the optical signal can be reduced using the function.

FIG. 4 is a flowchart showing a transmission method of the aggregate station 10. The transmission unit 100 transmits an electrical signal to the E/O conversion unit 101 (step S1). The E/O conversion unit 101 converts the electrical signal into an optical signal (step S2). The multiplexing/demultiplexing unit 102 multiplexes optical signals (step S3). An optical signal obtained in the multiplexing process is transmitted to the first extension station 11-1.

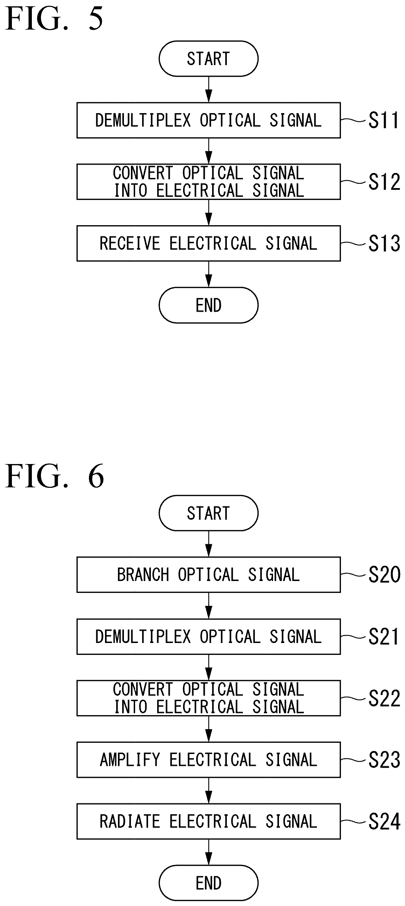

FIG. 5 is a flowchart showing a reception method of the aggregate station 10. The multiplexing/demultiplexing unit 102 demultiplexes an optical signal received from the first extension station 11-1 (step S11). The O/E conversion unit 103 converts the optical signal into an electrical signal (step S12). The reception unit 104 receives the electrical signal (step S13).

FIG. 6 is a flowchart showing a communication method in which the extension station 11 communicates with upstream equipment. The optical splitter 110 branches an optical signal received from the upstream equipment (step S20). The branched optical signal is transmitted to the multiplexing/demultiplexing unit 111 and downstream equipment. The multiplexing/demultiplexing unit 111 branches the optical signal received from the optical splitter 110 (step S21). The O/E conversion unit 112 converts the optical signal into an electrical signal (step S22). The transmission amplifier 113 amplifies the electrical signal (step S23). The electrical signal is emitted from the antenna 115 via the circulator 114 (step S24).

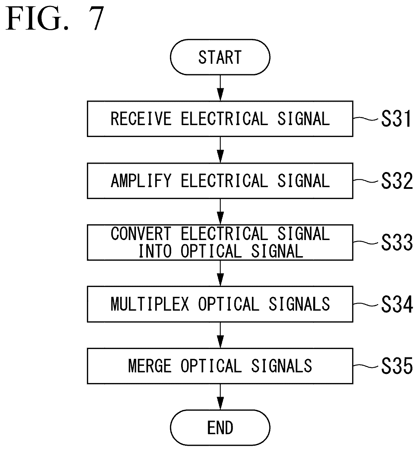

FIG. 7 is a flowchart showing a communication method in which the extension station 11 communicates with downstream equipment. The antenna 115 receives an electrical signal (step S31). The electrical signal is amplified by the reception amplifier 116 via the circulator 114 (step S32). The E/O conversion unit 117 converts the electrical signal into an optical signal (step S33). The multiplexing/demultiplexing unit 111 multiplexes optical signals (step S34). The optical splitter 110 merges the optical signal received from the multiplexing/demultiplexing unit 111 and the optical signal received from the downstream equipment and transmits a merging result to the upstream equipment (step S35).

The wavelength of the optical signal transmitted from the aggregate station 10 to the extension station 11 is only λ_{DL} and the wavelength of the optical signal received from the extension station 11 to the aggregate station 10 is only λ_{UL}. Therefore, all extension stations 11 process optical signals having the wavelength λ_{DL} transmitted in a downlink direction and transmit optical signals having the wavelength λ_{UL} in an uplink direction. That is, the wavelengths of the optical signal in the uplink direction and the optical signal in the downlink direction allocated to all extension stations 11 are the same.

Thereby, the multiplexing/demultiplexing units 111 provided in the extension stations 11 may all be the same. Moreover, when the branching ratios of the optical splitters 110 are all the same, the extension stations 11 may all have the same configuration. The optical communication system 1 can be particularly utilized in high-frequency band distributed antenna technology for installing a large number of antennas and allowing the visibility of any antenna to be secured or obtaining a gain using multiple antennas. The optical communication system 1 may perform an in-phase synthesis process for signals transmitted and received by a plurality of antennas by making a phase adjustment at the extension station 11. When the aggregate station and each extension station transmit and receive the same signal, it is not necessary to allocate two wavelengths to each extension station.

As a result of the above, the difference in design for each extension station can be reduced and an optical communication system can be provided at a lower cost.

The i^{th} optical splitter 110-i may branch the received optical signal so that the magnitude ratio is 1:(N-i). The i^{th} optical splitter 110-i may transmit optical signals obtained in the branching process to the i^{th} multiplexing/demultiplexing unit 111-i and the (i+1)^{th} extension station 1 1-(i+1) so that a ratio of the magnitude of the optical signal to be transmitted to i^{th} multiplexing/demultiplexing unit 111-i and the magnitude of the optical signal to be transmitted to the (i+1)^{th} extension station 11-(i+1) becomes 1:(N-i). Thereby, the magnitudes of the optical signals transmitted to the multiplexing/demultiplexing units 111 of all extension stations 11 can be equalized.

### <Other embodiments>

Although embodiments of the present invention have been described above in detail with reference to the drawings, specific configurations are not limited to the embodiments and other designs and the like may also be included without departing from the spirit and scope of the present invention.

In the optical communication system 1 according to the above-described embodiment, an array of the plurality of extension stations 11 having a cascade connection does not branch in the middle, but the array of the extension stations 11 may branch in the middle in other embodiments. That is, two or more extension stations 11 may be connected to the downward side of a certain extension station 11. At this time, a branching process is performed at the branching ratio of the extension station 11 as a ratio of the number of extension stations 11 constituting the array of the extension stations connected to the downlink side. Moreover, in the optical splitter of the extension station in the downlink direction after branching, a ratio between a magnitude of the optical signal input to a j^{th} extension station (j is an integer satisfying 1 ≤ j ≤ M) and a magnitude of the output optical signal is (M-j+1):(M-j) when the number of extension stations in the downlink direction after branching is denoted by M and a distance from a branch point is shorter in the order of the first extension station, the second extension station, and the like.

An optical signal multiplexing/demultiplexing method in the multiplexing/demultiplexing unit 102 and the multiplexing/demultiplexing unit 111 is not particularly limited. For example, the multiplexing/demultiplexing unit 102 and the multiplexing/demultiplexing unit 111 may multiplex/demultiplex optical signals according to frequency division multiplexing/demultiplexing or multiplex/demultiplex optical signals according to time division multiplexing/demultiplexing.

The multiplexing/demultiplexing unit 111 may be an optical circulator. The circulator outputs an optical signal input from the optical splitter 110 to the O/E conversion unit 112 and outputs an optical signal input from the E/O conversion unit 117 to the optical splitter 110.

The extension station 11 may include a control unit 118. When the multiplexing/demultiplexing unit 111 multiplexes and demultiplexes the optical signals according to time division multiplexing/demultiplexing, the circulator 114 may be a time division duplexing (TDD) switch and the control unit 118 may control the TDD switch to switch a connection of the transmission amplifier 113 and the circulator 114 and a connection of the circulator 114 and the reception amplifier 116. When the multiplexing/demultiplexing unit 111 multiplexes and demultiplexes optical signals according to time division multiplexing/demultiplexing, the wavelength λ_{DL} of the optical signal transmitted by the E/O conversion unit 101 and the wavelength λ_{UL} of the optical signal received by the O/E conversion unit 103 may be the same wavelength.

The antenna 115 may be an array antenna controllable in a beam direction and the control unit 118 may control the antenna 115 to change the beam direction in which the antenna 115 performs transmission and reception.

The control unit 118 may be controlled on the basis of a control signal received from the aggregate station 10. The control signal may be multiplexed into a downlink optical signal to be transmitted by the aggregate station 10 according to subcarrier multiplexing, polarization multiplexing, or wavelength multiplexing and transmitted to the extension station 11. The wavelength of the control signal may be a wavelength different from either λ_{DL} or λ_{UL}. At this time, a circulator or the like may be provided between the multiplexing/demultiplexing unit 111 and the E/O conversion unit 117 so that a control signal is prevented from being input from the multiplexing/demultiplexing unit 111 to the E/O conversion unit 117.

The control unit 118 may control whether or not to merge the optical signals at the extension station 11. That is, the control unit 118 may control the optical splitter 110 and output the optical signal input from the downstream equipment by the optical splitter 110 to the upstream equipment without merging it with the optical signal input from the multiplexing/demultiplexing unit 111.

The extension station 11 may transmit a signal including information about the quality of the signal output to the aggregate station 10 to the aggregate station 10. The extension station 11 may transmit a signal including the information to the optical signal in the uplink direction to the aggregate station 10 according to subcarrier multiplexing, polarization multiplexing, or wavelength multiplexing. The aggregate station 10 may transmit a control signal on the basis of a signal including the information. For example, the aggregate station 10 may select an extension station 11 with high quality of the signal to be output on the basis of the signal including the information and transmit a control signal for receiving the signal only from the extension station 11.

The optical communication system 1 employs analog radio-over-fiber (RoF) and the present invention is not limited thereto. The optical communication system 1 may employ digital RoF (for example, a common public radio interface (CPRI) or enhanced common public radio interface (eCPRI)) or digital coherent transmission, the aggregate station 10 may include an A/D converter, each extension station 11 includes a digital-to-analog (D/A) converter, and the aggregate station 10 may transmit a digital signal.

The present invention can be applied even if the aggregate station 10 and the extension station are connected by a mobile fronthaul in the optical communication system 1.

### [Reference Signs List]

10 Aggregate station
11 Extension station
100 Transmission unit
101 E/O conversion unit
102 Multiplexing/demultiplexing unit
103 O/E conversion unit
104 Reception unit
110 Optical splitter
111 Multiplexing/demultiplexing unit
112 O/E conversion unit
113 Transmission amplifier
114 Circulator
115 Antenna
116 Reception amplifier
117 E/O conversion unit

## Claims

1. An optical communication system having an aggregate station at a head and a plurality of extension stations connected in series,
wherein the aggregate station outputs a downlink optical signal generated by performing electrical-to-optical (E/O) conversion for a radio signal to the plurality of extension stations and acquires radio signals by performing optical-to-electrical (O/E) conversion for uplink optical signals input from the plurality of extension stations,
wherein each extension station transmits a radio signal obtained by performing O/E conversion for the downlink optical signal received from the aggregate station and transmits an uplink optical signal generated by performing E/O conversion for a received radio signal to the aggregate station, and
wherein wavelengths of the uplink optical signal and the downlink optical signal allocated to the plurality of extension stations are the same.

2. An aggregate station in an optical communication system having the aggregate station at a head and a plurality of extension stations connected in series,
wherein only an optical signal of a first wavelength is transmitted to the extension station and only an optical signal of a second wavelength different from the first wavelength is received from the extension station.

3. A communication method in an optical communication system having an aggregate station at a head and a plurality of extension stations connected in series, the communication method comprising:
a downlink optical signal generation step of generating a downlink optical signal by performing E/O conversion for a radio signal in the aggregate station;
an output step of outputting the downlink optical signal to the plurality of extension stations;
a radio signal acquisition step of acquiring radio signals by performing O/E conversion for uplink optical signals input from the plurality of extension stations;
a radio signal transmission step of transmitting a radio signal obtained by performing O/E conversion for the downlink optical signal received from the aggregate station in the extension station; and
an optical signal transmission step of transmitting an uplink optical signal generated by performing E/O conversion for a received radio signal to the aggregate station,
wherein wavelengths of the uplink optical signal and the downlink optical signal allocated to the plurality of extension stations are the same.
